# EUROPEAN PATENT SPECIFICATION

(11) **EP 3 731 055 B1**
(45) Date of publication and mention of the grant of the patent: **08.09.2021**
(21) Application number: 20170301.4
(22) Date of filing: 20.04.2020
(51) Int. Cl.: G05D 1/06

(54) **UNMANNED AIR VEHICLE, MOBILE GUIDING SYSTEM AND AIR VEHICLE/GUIDING SYSTEM ARRANGEMENT**
UNBEMANNTES LUFTFAHRZEUG, MOBILES LEITSYSTEM UND LUFTFAHRZEUG-/LEITSYSTEMANORDNUNG
AÉRONEF SANS PILOTE, SYSTÈME DE GUIDAGE MOBILE ET AGENCEMENT DE AÉRONEF/SYSTÈME DE GUIDAGE

(30) Priority: 23.04.2019 DE 102019110459
(43) Date of publication of application: 28.10.2020
(73) Proprietor: Airbus Defence and Space GmbH, 82024 Taufkirchen (DE)
(72) Inventor: Vogelmann, Dietmar, 82024 Taufkirchen (DE); Unterreiner, Heinz, 82024 Taufkirchen (DE)
(74) Representative: Schicker, Silvia

(56) References cited:
- EP-A1- 1 388 772
- US-A1- 2009 055 038
- US-A1- 2011 285 981

## Description

The present invention relates to an unmanned aircraft and to a mobile guidance system for an unmanned aircraft. Finally, the invention relates to an aircraft/guidance system arrangement comprising an unmanned aircraft and a mobile guidance system for the unmanned aircraft.

Unmanned aircraft may be useful, in particular, in situations in which goods, for example items of equipment or supply goods, are intended to be brought into an area which is not accessible to manned aircraft. Furthermore, unmanned aircraft can be used in situations in which it is necessary to fly items or persons out of an area which is not accessible to manned aircraft. However, for this purpose, it is necessary to reliably and safely navigate the unmanned aircraft to a desired landing zone in which the unmanned aircraft can land in an accurate position or can drop goods from the air.

The autonomous landing of unmanned aircraft usually requires a suitable landing zone equipped with appropriate technical components, for example an instrument landing system (ILS) or a transponder landing system (TLS). However, when using an unmanned aircraft to flexibly head towards different landing zones, it is often not possible to rely on a landing zone having such permanently installed technological equipment. Additionally or alternatively, unmanned aircraft can be remotely controlled. This can be carried out visually on the basis of video images or telemetry data which are transmitted by the unmanned aircraft. In certain situations, for example poor weather conditions or unfavourable topographical conditions, the data transmitted by the unmanned aircraft possibly cannot suffice, however, to certainly determine whether or not a landing zone which is aimed at is actually suitable for landing the aircraft or for dropping goods.

US 2009/055038 A1 refers to a system that, in order to guide an aircraft in a landing phase, comprises a detecting and locating device 11, located on the ground, and a multifunction beacon 12 on board the aircraft 13 (cf. par. [0028]). The detecting and locating device 11 is configured to periodically measure an altitude h of the aircraft 13 and a radial distance D which separates the aircraft from the point on which it is located. It also measures direction and altitude differences that exist between the direction connecting this device to the aircraft and a reference direction (cf. par. [0028]). The multifunction beacon 12 handles a radioaltimeter function (cf. par. [0037]).

The present invention is directed to the object of specifying an unmanned aircraft and a mobile guidance system for an unmanned aircraft which reliably make it possible to safely autonomously control the unmanned aircraft to a desired landing zone. The invention is also directed to the object of providing an aircraft/guidance system arrangement comprising an unmanned aircraft and a mobile guidance system for the unmanned aircraft.

This object is achieved by means of an unmanned aircraft having the features of Claim 1 and an aircraft/guidance system arrangement having the features of Claim 9.

An unmanned aircraft comprises a GPS receiver which is configured to receive a GPS signal defining a desired landing zone for the unmanned aircraft. The unmanned aircraft also comprises a transponder which is configured to transmit a position signal defining a current position of the unmanned aircraft. The transponder is also configured to receive a position correction signal if the current position of the unmanned aircraft differs from a desired position. Finally, the unmanned aircraft comprises a light signal receiver which is configured to receive a light signal defining the desired landing zone for the unmanned aircraft.

A control system for autonomously controlling the unmanned aircraft is configured to control a landing approach of the unmanned aircraft to the desired landing zone at least in a first phase of the landing approach on the basis of the GPS signal received by the GPS receiver. The control system is also configured to control the landing approach of the unmanned aircraft to the desired landing zone at least in a second phase of the landing approach following the first phase on the basis of the position correction signal received by the transponder. Finally, the control system is configured to control the landing approach of the unmanned aircraft to the desired landing zone at least in a third phase of the landing approach following the second phase on the basis of the light signal received by the light signal receiver.

The control system of the unmanned aircraft is consequently configured, when controlling the landing approach of the unmanned aircraft to the desired landing zone, to resort to three different complementary systems. GPS signals can be easily transmitted over long distances, but can define the desired landing zone only with a certain inaccuracy. In the first phase of the landing approach, during which the unmanned aircraft is still relatively far away from the desired landing zone, the control system therefore initially uses the GPS signal received by the GPS receiver to control the unmanned aircraft in the direction of the desired landing zone. If desired or necessary, however, the control system can also resort to GPS signals received by the GPS receiver to control the unmanned aircraft during subsequent phases of the landing approach of the unmanned aircraft to the desired landing zone which follow the first phase.

The transponder of the unmanned aircraft transmits position signals characteristic of a current position of the unmanned aircraft either already during the first phase of the landing approach of the unmanned aircraft to the desired landing zone, but at least during the second phase of the landing approach of the unmanned aircraft to the desired landing zone, which second phase follows the first phase. The transponder also receives position correction signals either already during the first phase of the landing approach of the unmanned aircraft to the desired landing zone, but at least during the second phase of the landing approach of the unmanned aircraft to the desired landing zone, which second phase follows the first phase, if the current position of the unmanned aircraft differs from a desired position. The position signal transmitted by the transponder of the unmanned aircraft and/or the position correction signal received by the transponder of the unmanned aircraft may be a radio signal, in particular a radio burst signal.

As a result, the control system can control the unmanned aircraft to the desired landing zone along a desired landing path at the latest during the second phase of the landing approach on the basis of the position correction signals received by the transponder. At least during the second phase of the landing approach of the unmanned aircraft to the desired landing zone, the unmanned aircraft is consequently controlled in a similar manner to the control of a commercial aircraft using an ILS or a TLS. The control of the unmanned aircraft on the basis of the position signals transmitted by the transponder and the position correction signals received by the transponder can also continue during the third phase of the landing approach which follows the second phase of the landing approach of the unmanned aircraft to the desired landing zone.

In any case, however, the light signals received by the light signal receiver are taken into account in the third phase of the landing approach when controlling the final landing approach of the unmanned aircraft to the desired landing zone. Light signals have a comparatively short range, but allow the desired landing zone to be indicated in a particularly accurate manner. Therefore, the use of light signals in the third phase of the landing approach, that is to say when the unmanned aircraft is already in the vicinity of the desired landing zone and/or there is even visual contact with the desired landing zone, makes it possible to control the unmanned aircraft to the desired landing zone in a particularly accurate manner.

The unmanned aircraft can consequently be controlled to the desired landing zone in a particularly accurate manner in order to land in the desired landing zone with pinpoint accuracy or to drop loads from the air into the desired landing zone with pinpoint accuracy. In addition, the unmanned aircraft is distinguished by a high degree of reliability since, even if one of the three systems operating independently of one another fails, it is still possible to autonomously head towards the desired landing zone, albeit with a certain inaccuracy. The unmanned aircraft is therefore particularly well suited to bringing loads into inaccessible areas in a reliable manner and with pinpoint accuracy or to fetch loads from these areas in a reliable manner and with pinpoint accuracy.

The signals used by the control system of the unmanned aircraft to control the aircraft may be provided by a single guidance system. In particular, the signals used by the control system of the unmanned aircraft to control the aircraft can be provided by a mobile guidance system which is described in yet more detail below. Alternatively, however, it is also conceivable for the control system of the unmanned aircraft to receive signals from different guidance systems and to use them to control the landing approach of the unmanned aircraft to the desired landing zone.

In addition to the signal receiving systems described above, the unmanned aircraft can also comprise a laser signal receiver which is configured to receive a laser signal indicating the desired landing zone. The laser signal can be transmitted by a separate system. For example, the laser signal can be transmitted by a mobile device, for example a mobile laser pointer which can be manually operated, another unmanned aircraft, a manned aircraft or the like, in order to mark the desired landing zone. Alternatively, however, it is also conceivable for the laser signal to be transmitted by a system which also emits the GPS signal, the position correction signal and/or the light signal. The important factor is only that the laser signal marks the desired landing zone in a manner discernible to the laser signal receiver of the unmanned aircraft.

The control system for autonomously controlling the unmanned aircraft is preferably configured to control the landing approach of the unmanned aircraft to the desired landing zone in the first, second and/or third phase of the landing approach on the basis of the laser signal received by the laser signal receiver. A further option for a signal, on the basis of which it is possible to control the landing approach of the unmanned aircraft, is therefore available to the control system when controlling the landing approach of the unmanned aircraft to the desired landing zone. As a result, if necessary, for example if a guidance system providing the GPS signal, the position correction signal and/or the light signal fails, the desired landing zone can be marked by means of a laser pointer which can be manually operated or the like, and the unmanned aircraft can autonomously on the basis of the laser signal transmitted by the laser pointer.

In one preferred embodiment, the unmanned aircraft comprises a basic body. Further, the unmanned aircraft may comprise at least one drive rotor connected to the basic body. If necessary, the unmanned aircraft can also comprise a plurality of rotors. For example, the unmanned aircraft may be in the form of a quadrocopter, that is to say may have four drive rotors. The drive rotor(s) is/are preferably accommodated in a rotor cage. This makes it possible to ensure that persons approaching the unmanned aircraft, for example during landing or starting of the unmanned aircraft, are not injured by the drive rotors.

In one particularly preferred embodiment of the unmanned aircraft, the basic body is foldable. As a result, the unmanned aircraft can be folded up to a smaller volume and can thereby be stored and transported in a simpler manner. The foldable basic body of the unmanned aircraft may comprise, for example, two basic body sections which are pivotable relative to one another and are connected to one another by means of at least one hinge or a flexible basic body section.

The basic body of the unmanned aircraft can be foldable about a folding axis. For example, the basic body may comprise two basic body sections which are pivotable relative to one another and are connected to one another along the folding axis by means of at least one hinge or a flexible basic body section. If an unmanned aircraft equipped with a foldable basic body comprises a plurality of drive rotors, these drive rotors are preferably arranged symmetrically around the folding axis.

The unmanned aircraft may comprise a landing frame which is preferably connected to the basic body. The landing frame may be in the form of landing gear, in the form of landing skids, in the form of landing feet or in any other desired suitable form. The provision of a landing frame makes it possible for the unmanned aircraft to land in the desired landing zone. However, it is not absolutely necessary to equip the unmanned aircraft with a landing frame. For example, it is possible to dispense with a landing frame if the unmanned aircraft is only intended to be used to drop supply goods in the desired landing zone from the air. Additionally or alternatively, the unmanned aircraft may comprise a carrier for accommodating loads which is preferably connected to the basic body.

The carrier for accommodating loads may comprise, for example, a stretcher suitable for supporting a person. The stretcher may be fastened, for example, to an underside of the basic body in such a manner that a person can be placed on the stretcher as soon as the unmanned aircraft has landed in the desired landing zone or is hovering at a low height above the desired landing zone. The unmanned aircraft can then be advantageously used to evacuate persons from an area which is difficult to access.

Alternatively or additionally, the carrier for accommodating loads may comprise a holder which is adjustable between a holding position, in which it connects a load to the basic body of the unmanned aircraft, and a release position, in which it allows the load to be released from the basic body of the unmanned aircraft. The holder is preferably fastened to an underside of the basic body. For example, the holder may comprise a pair of gripping arms or gripping claws which, in their holding position, can engage around a gripping apparatus which is spherical, for example, and can be fastened to a load to be transported by means of the unmanned aircraft by means of a flexible but dimensionally stable element, for example a rubber rod, a cable or a chain. The load can then be transported in a manner suspended below the unmanned aircraft and can be dropped in the desired landing zone by changing the holder from its holding position to its release position.

The unmanned aircraft can also have an altitude sensor for measuring the altitude of the unmanned aircraft above sea level. The altitude sensor may be configured, for example, to measure the air pressure in the environment of the unmanned aircraft and to derive the altitude above sea level therefrom. Additionally or alternatively, the unmanned aircraft may be equipped with a distance sensor which may be configured, in particular, to measure the height of the unmanned aircraft above ground. The operation of a carrier for accommodating loads and, in particular, the operation of a holder adjustable between a holding position and a release position can be controlled on the basis of the signals provided by an altitude sensor and/or a distance sensor in order to drop a load in the desired landing zone from a defined height. For example, the control system of the unmanned aircraft can control the holder from its holding position to its release position as soon as the unmanned aircraft is hovering at a desired height above the desired landing zone.

In one preferred embodiment, the unmanned aircraft also comprises at least one safety switch which is configured to transmit a release signal to the control system of the unmanned aircraft. The safety switch may be in the form of a manually actuatable safety switch, for example, and can be fitted to the unmanned aircraft in such a manner that it is accessible to a person in the region of the desired landing zone. For example, the safety switch can be fastened to a load carrier or to a landing frame of the unmanned aircraft.

The control system of the unmanned aircraft is preferably configured to allow the unmanned aircraft to be started only in response to the reception of the release signal from the safety switch. This makes it possible to prevent the unmanned aircraft, for example after landing in the desired landing zone, from starting too early again from the desired landing zone. Equipping the unmanned aircraft with a safety switch is useful, in particular, when the unmanned aircraft is intended to be used to transport loads and/or persons from an area comprising the desired landing zone.

A mobile guidance system, that is to say a portable or independently movable guidance system for example, for assisting with the approach of an unmanned aircraft to a desired landing zone comprises a GPS transmitter which is configured to transmit a GPS signal defining a desired landing zone for the unmanned aircraft. The mobile guidance system also comprises a transponder which is configured to receive a position signal defining a current position of the unmanned aircraft. The transponder is also configured to transmit a position correction signal if the current position of the unmanned aircraft differs from a desired position. Finally, the mobile guidance system is equipped with a light signal transmitter which is configured to transmit a light signal defining the desired landing zone.

A processor of the mobile guidance system is configured to cause the GPS transmitter to transmit the GPS signal at least in a first phase of a landing approach of the unmanned aircraft to the desired landing zone. The processor is also configured to evaluate the position signal which is received by the transponder and defines the current position of the unmanned aircraft and to transmit a position correction signal at least in a second phase of the landing approach of the unmanned aircraft to the desired landing zone, which second phase follows the first phase, if the current position of the unmanned aircraft differs from a desired position. Finally, the processor is configured to cause the light signal transmitter to transmit the light signal at least in a third phase of the landing approach of the unmanned aircraft to the desired landing zone, which third phase follows the second phase.

The mobile guidance system may also comprise an image signal transmitter which is configured to transmit a visual recognition signal. The processor of the mobile guidance system is then also preferably configured to cause the image signal transmitter to transmit the visual recognition signal during the landing approach of the unmanned aircraft to the desired landing zone. The visual recognition signal may be a QR code, for example. Additionally or alternatively, the mobile guidance system may have a fixed visual recognition signal. For example, a fixed QR code can be applied to the mobile guidance system.

The unmanned aircraft is then preferably equipped with a camera which is configured to capture the visual recognition signal. The control system of the unmanned aircraft can then be configured to control the landing approach of the unmanned aircraft to the desired landing zone on the basis of the visual recognition signal. For example, the control unit can determine, by means of a comparison with a database, whether the captured visual recognition signal belongs to the authorized landing signals.

The mobile guidance system can be easily placed in the desired landing zone. In a similar manner to the control system of the unmanned aircraft, the mobile guidance system is also configured to resort to three different complementary systems when assisting with the approach of the unmanned aircraft to the desired landing zone. At least in the first phase of the landing approach, during which the unmanned aircraft is still relatively far away from the desired landing zone, the GPS transmitter of the mobile guidance system emits GPS signals which can be easily transmitted over long distances to the GPS receiver of the unmanned aircraft, but can define the desired landing zone only with a certain inaccuracy. If desired or necessary, however, the GPS transmitter of the mobile guidance system can also emit GPS signals during subsequent phases of the landing approach of the unmanned aircraft to the desired landing zone which follow the first phase, which GPS signals can be used by the control system of the unmanned aircraft to control the unmanned aircraft.

The transponder of the mobile guidance system receives the position signals which are transmitted by the transponder of the unmanned aircraft and are characteristic of the current position of the unmanned aircraft at the latest during the second phase of the landing approach of the unmanned aircraft to the desired landing zone, which second phase follows the first phase. These signals are evaluated by the processor of the mobile guidance system, that is to say the current position of the unmanned aircraft is compared with a desired position. The processor then transmits a position correction signal which can be received by the transponder of the unmanned aircraft and can be used by the control system of the unmanned aircraft to control the landing approach of the unmanned aircraft to the desired landing zone. For example, the processor can transmit the position correction signal if the processor determines that the current position of the unmanned aircraft differs from the desired position. Alternatively, the processor can also permanently emit signals. The position signal received by the transponder of the mobile guidance system and/or the position correction signal transmitted by the transponder of the mobile guidance system may be a radio signal, in particular a radio burst signal.

The mobile guidance system is consequently able to guide the unmanned aircraft along a desired landing path in the direction of the desired landing zone at the latest during the second phase of the landing approach in a similar manner to an ILS or a TLS used to control commercial aircraft. The processor of the mobile guidance system can continue to guide the approach of the unmanned aircraft to the desired landing zone on the basis of the position correction signals transmitted by the transponder of the mobile guidance system even during the third phase of the landing approach which follows the second phase of the landing approach of the unmanned aircraft to the desired landing zone.

In any case, the processor of the mobile guidance system ensures, at the latest in the third phase of the landing approach of the unmanned aircraft to the desired landing zone, that the light signal transmitter of the mobile guidance system emits light signals. These light signals can be used, at the latest in the third phase of the landing approach, by the control system of the unmanned aircraft to approach the desired landing zone in a particularly accurate manner.

The mobile guidance system therefore makes it possible to guide the unmanned aircraft to the desired landing zone in a particularly accurate manner where the unmanned aircraft can land with pinpoint accuracy or can drop loads from the air with pinpoint accuracy. In addition, the mobile guidance system is distinguished by a high degree of reliability since the unmanned aircraft can always be guided in the direction of the desired landing zone, even if one of the three systems operating independently of one another fails, albeit with a certain inaccuracy. The mobile guidance system is therefore particularly well suited to guiding an unmanned aircraft into inaccessible areas in a reliable manner and with pinpoint accuracy.

In one preferred embodiment, the mobile guidance system is equipped with an energy source which supplies the electrical and electronic components of the mobile guidance system with energy. The energy source may comprise a thermal battery, for example. A thermal battery can provide a large amount of energy once and for a short time and is therefore particularly well suited to use in a mobile guidance system which is provided for single use, for example in an emergency. Alternatively or additionally, the energy source of the mobile guidance system may comprise a rechargeable battery and/or a disposable battery. Such batteries are suitable for repeated use and can therefore be advantageously used in a mobile guidance system which is used to repeatedly guide unmanned supply aircraft to a desired landing zone.

The mobile guidance system may comprise a housing in which the electrical and electronic components of the mobile guidance system are accommodated. The housing preferably consists of a material which is resistant to thermal and mechanical loads, for example a high-strength plastic, a composite material or metal.

The light signal transmitter of the mobile guidance system is preferably configured to transmit pulsed light signals. Additionally or alternatively, the light signal transmitter of the mobile guidance system can be configured to transmit light signals of different wavelengths. For example, the light signal transmitter may comprise a first light source, which emits light in the visible wavelength range, and a second light source, which emits light in the infrared wavelength range.

An aircraft/guidance system arrangement comprises an unmanned aircraft described above and a mobile guidance system described above.

Preferred embodiments of an unmanned aircraft, of a mobile guidance system for assisting with the approach of an unmanned aircraft to a desired landing zone and of an aircraft/guidance system arrangement are illustrated in the accompanying schematic drawings, in which:
- Fig. 1: shows a plan view of a first embodiment of an unmanned aircraft;
- Fig. 2: shows a side view of the unmanned aircraft according to Figure 1;
- Fig. 3: shows a front view of the aircraft according to Figure 1;
- Fig. 4: shows a front view of a second embodiment of an unmanned aircraft;
- Fig. 5: shows the aircraft according to Figure 4 when dropping a load in a desired landing zone;
- Fig. 6: shows a detailed view of a mobile guidance system for assisting with the approach of an unmanned aircraft to a desired landing zone;
- Fig. 7: shows a first phase of a landing approach of an unmanned aircraft to the desired landing zone which is assisted by a mobile guidance system according to Figure 6;
- Fig. 8: shows a second phase of a landing approach of an unmanned aircraft to the desired landing zone which is assisted by a mobile guidance system according to Figure 6;
- Fig. 9: shows a third phase of a landing approach of an unmanned aircraft to the desired landing zone which is assisted by a mobile guidance system according to Figure 6; and
- Fig. 10: shows the landing approach of an unmanned aircraft to a desired landing zone with the aid of a laser signal.

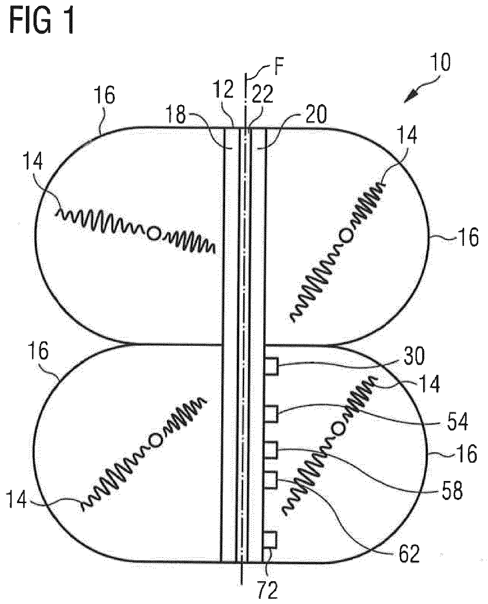

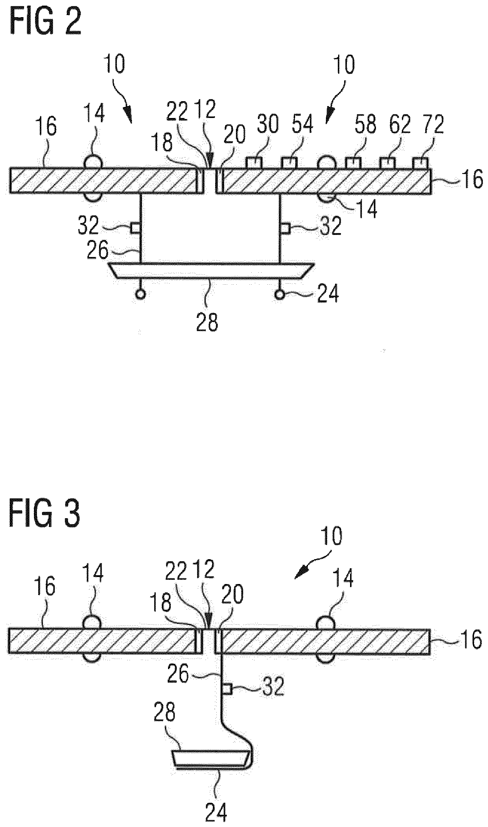

Figures 1 to 3 show a first embodiment of an unmanned aircraft 10 which comprises a basic body 12 and four structurally identical drive rotors 14 which are connected to the basic body 12. Each of the drive rotors 14 is accommodated in a rotor cage 16.

This makes it possible to reliably prevent persons in the vicinity of the unmanned aircraft 10 during starting or landing of the unmanned aircraft 10 from being injured by the drive rotors 14.

The basic body 12 of the unmanned aircraft 10 comprises a first section 18 and a second section 20. The two sections 18, 20 of the basic body 12 are connected to one another along a folding axis F by means of a flexible section 22. As a result, the basic body 12 of the unmanned aircraft 10 is foldable. In particular, the basic body 12 is foldable about the folding axis F, with the result that, when the basic body 12 is being folded up, two of the drive rotors 14 or rotor cages 16 arranged symmetrically around the folding axis F respectively come to rest on one another. In its folded-up state, the unmanned aircraft 10 has a considerably smaller volume and, as a result, can be stored and transported more easily.

The unmanned aircraft 10 also comprises a landing frame 24 which is connected to the basic body 12 and, in the exemplary embodiment of an unmanned aircraft 10 shown in the figures, is in the form of landing skids., However, it is also conceivable, depending on requirements, for the landing frame 24 to be in the form of landing gear, in the form of landing feet or the like. In addition, the unmanned aircraft 10 is equipped with a carrier 26 for accommodating loads. The carrier 26 is connected to the basic body 12. More precisely, the carrier 26 is fastened to an underside of the basic body 12.

In the first exemplary embodiment of an unmanned aircraft 10 illustrated in Figures 1 to 3, the carrier 26 for accommodating loads comprises a stretcher 28 suitable for supporting a person. The stretcher 28 is fastened to the underside of the basic body 12 and is supported by the landing skids of the landing frame 24 in such a manner that a person can be placed on the stretcher 28 as soon as the unmanned aircraft 10 has landed or is hovering at a low height. The unmanned aircraft 10 illustrated in Figures 1 to 3 can consequently be used, for example, to evacuate persons from an area which is difficult to access.

The unmanned aircraft 10 is controlled by means of a control system 30 and can be operated autonomously under the control of the control system 30. For example, the unmanned aircraft 10 can start autonomously, can autonomously and can land autonomously under the control of the control system 30. In order to nevertheless enable manual intervention in the autonomous operation of the unmanned aircraft 10, the unmanned aircraft 10 is equipped with a safety switch 32. The safety switch 32 is configured to transmit a release signal to the control system 30 of the unmanned aircraft 10. In the unmanned aircraft 10 shown in Figures 1 to 3, the safety switch 32 is in the form of a manually actuatable safety switch and is fitted to the carrier 26 of the unmanned aircraft 10 in such a manner that it is accessible to a person in the vicinity of the unmanned aircraft 10, for example when evacuating a person by means of an unmanned aircraft 10.

The control system 30 of the unmanned aircraft 10 is configured to allow the unmanned aircraft 10 to start only in response to the reception of the release signal from the safety switch 32. In other words, the control system 30 makes it possible for the unmanned aircraft 10 to start only when the safety switch 32 has been previously manually actuated and the start of the unmanned aircraft 10 was manually released thereby. This makes it possible to prevent the unmanned aircraft 10 from starting again too early, for example after landing.

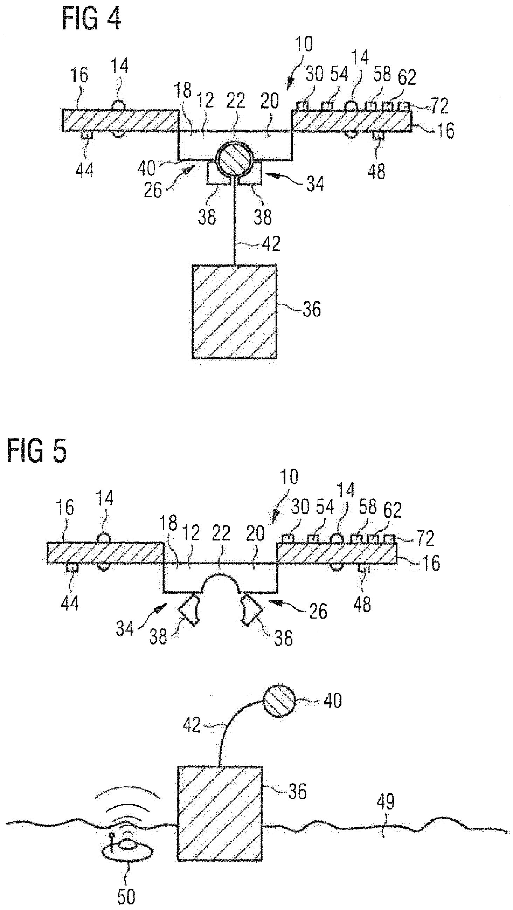

Figures 4 and 5 show a second embodiment of an unmanned aircraft 10 which differs from the embodiment variant illustrated in Figures 1 to 3 in that it does not have a landing frame 24. Furthermore, the carrier 26 for accommodating loads which is provided on the unmanned aircraft 10 does not have a stretcher 28. Instead, the carrier 26 is equipped with a holder 34 which is adjustable between a holding position shown in Figure 4 and a release position illustrated in Figure 5. In its holding position, the holder 34 connects a load 36 to the basic body 12 of the unmanned aircraft 10. In contrast, in its release position, the holder 34 allows the load 36 to be released from the basic body 12 of the unmanned aircraft 10. The operation of the holder 34 is controlled by means of the control system 30. Consequently, the holder 34 can also be operated autonomously.

In the exemplary embodiment shown in Figures 4 and 5, the holder 34 is fastened to an underside of the basic body 12 and comprises a pair of gripping arms 38. If the gripping arms 38 are in their holding position, as shown in Figure 4, they are able to engage around a gripping apparatus 40 which is spherical here, for example, and is fastened to the load 36 to be transported by means of the unmanned aircraft 10 via a cable 42. As a result, the load 36 can be transported in a manner suspended below the unmanned aircraft 10. In contrast, changing the gripping arms 38 to their release position shown in Figure 5 causes the release of the gripping apparatus 40 and consequently causes the load 36 to be released from the unmanned aircraft 10.

The unmanned aircraft 10 can consequently be used to drop the load 36 with pinpoint accuracy.

In addition, the unmanned aircraft 10 according to Figures 4 and 5 comprises an altitude sensor 44 for measuring the altitude of the unmanned aircraft 10 above sea level and a distance sensor 46 for measuring the height of the unmanned aircraft 10 above ground. The operation of the holder 34 is controlled by the control system 30 on the basis of the signals provided by the altitude sensor 44 and the signals provided by the distance sensor 48. In particular, the control system 30 of the unmanned aircraft 10 controls the holder 34 from its holding position to its release position as soon as the unmanned aircraft 10 is hovering at a desired height above a desired landing zone 49. As a result, the unmanned aircraft 10 can drop the load 36 from a defined height in the desired landing zone 49 with pinpoint accuracy.

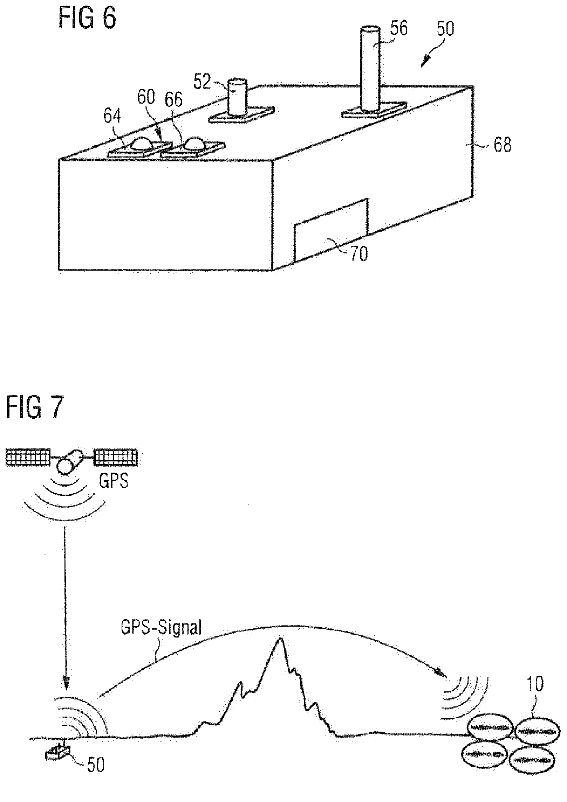

The approach of the unmanned aircraft 10 to the desired landing zone 49 is assisted by a mobile guidance system 50 shown in Figure 5. It goes without saying that the approach of the unmanned aircraft 10 shown in Figures 1 to 3 to a desired landing zone 49 can also be assisted by means of the mobile guidance system 50. Figure 6 shows a detailed illustration of the mobile guidance system 50.

The mobile guidance system 50 comprises a GPS transmitter 52 which is configured to transmit a GPS signal. If the mobile guidance system 50 is positioned in the desired landing zone 49, as shown in Figure 5, and a processor 53 of the mobile guidance system 50 causes the GPS transmitter 52 to transmit the GPS signal, the GPS signal transmitted by the GPS transmitter 52 defines the landing zone 49 in which the unmanned aircraft 10 is intended to land or drop a load 36. The GPS transmitter 52 of the mobile guidance system 50 communicates with a GPS receiver 54 of the unmanned aircraft 10 which is configured to receive the GPS signal transmitted by the GPS transmitter 52.

GPS signals can be easily transmitted over long distances, but can define the desired landing zone 49 only with a certain inaccuracy. In a first phase of the landing approach of the unmanned aircraft 10 to the desired landing zone 49, which is illustrated in Figure 7 and during which the unmanned aircraft 10 is still relatively far away from the desired landing zone 49, the control system 30 of the unmanned aircraft 10 therefore controls the landing approach of the unmanned aircraft 10 to the desired landing zone 49 on the basis of the GPS signals transmitted by the GPS transmitter 52 of the mobile guidance system 50 and the GPS signals received by the GPS receiver 54 of the unmanned aircraft 10. In particular, the control system 30 uses the GPS signals received by the GPS receiver 54 of the unmanned aircraft 10 to control the unmanned aircraft 10 in the direction of the desired landing zone 49.

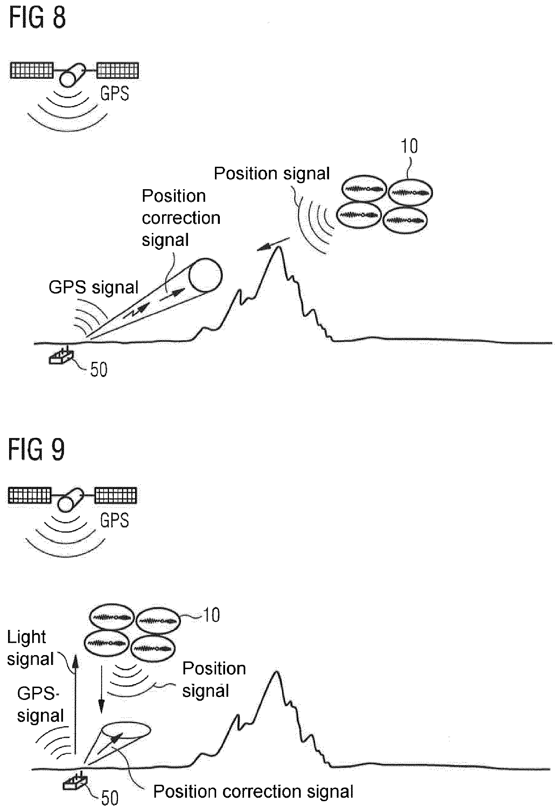

The mobile guidance system 50 also comprises a transponder 56 which communicates with a transponder 58 of the unmanned aircraft 10 at least in a second phase of the landing approach of the unmanned aircraft 10 to the desired landing zone 49, which is illustrated in Figure 8 and during which the unmanned aircraft 10 is already approaching the desired landing zone 49. In particular, during the second phase of the landing approach of the unmanned aircraft 10 to the desired landing zone 49, the transponder 58 of the unmanned aircraft 10 transmits a position signal defining a current position of the unmanned aircraft 10. This position signal is received by the transponder 56 of the mobile guidance system 50. The processor 53 of the mobile guidance system 50 evaluates the position signal. In particular, the processor 53 compares the current position of the unmanned aircraft 10 with a desired position and transmits a position correction signal if it determines that the current position of the unmanned aircraft 10 differs from the desired position.

This position correction signal is received by the transponder 58 of the unmanned aircraft 10 and is used by the control system 30 of the unmanned aircraft 10 to control the landing approach of the unmanned aircraft 10 to the desired landing zone 49 at least in the second phase of the landing approach which follows the first phase. The position signal and the position correction signal are each radio signals. The mobile guidance system 50 is consequently able to guide the unmanned aircraft 10 along a desired landing path in the direction of the desired landing zone at least during the second phase of the landing approach in a similar manner to an ILS or a TLS used to control commercial aircraft.

Finally, the mobile guidance system 50 comprises a light signal transmitter 60 which communicates with a light signal receiver 62 of the unmanned aircraft 10 at least in a third phase of the landing approach of the unmanned aircraft 10 to the desired landing zone 49, which is illustrated in Figure 9, when the unmanned aircraft 10 already has visual contact with the desired landing zone 49. In the third phase of the landing approach which follows the second phase, the processor 53 of the mobile guidance system 50 causes the light signal transmitter 60 to emit light signals. In particular, the light signal transmitter 60 of the mobile guidance system 50 is configured, in the variant shown in the figures, to transmit pulsed light signals of different wavelengths. For this purpose, the light signal transmitter 60 has a first light source 54, which emits pulsed light in the visible wavelength range, and a second light source 66, which emits pulsed light in the infrared wavelength range.

The light signals transmitted by the light signal transmitter 60 are received by the light signal receiver 62 of the unmanned aircraft 10. As a result, the control system 30 of the unmanned aircraft 10 is enabled to control the landing approach of the unmanned aircraft 10 to the desired landing zone 49 at least during the third phase of the landing approach in a very precise manner and with pinpoint accuracy on the basis of the light signals received by the light signal receiver 66.

The mobile guidance system 50 and the control system 30 of the unmanned aircraft 10 can each resort to three different complementary systems when assisting with and controlling the approach of the unmanned aircraft 10 to the desired landing zone 49. As a result, the landing approach of the unmanned aircraft 10 to the desired landing zone 49 can be controlled in a very reliable manner and with pinpoint accuracy.

As can best be seen in Figure 6, the mobile guidance system 50 comprises a housing 68 in which the electrical and electronic components of the mobile guidance system 10 are accommodated. The housing 68 consists of a material which is resistant to thermal and mechanical loads, for example a high-strength plastic, a composite material or metal. An energy source 70 is also accommodated in the housing 68. The energy source 70 supplies the electrical and electronic components of the mobile guidance system 10 with energy and, depending on the desired intended purpose of the mobile guidance system 50, can comprise a thermal battery, a rechargeable battery and/or a disposable battery.

The unmanned aircraft 10 and the mobile guidance system 50 together form an aircraft/guidance system arrangement 100 which allows completely autonomous operation of the unmanned aircraft 10.

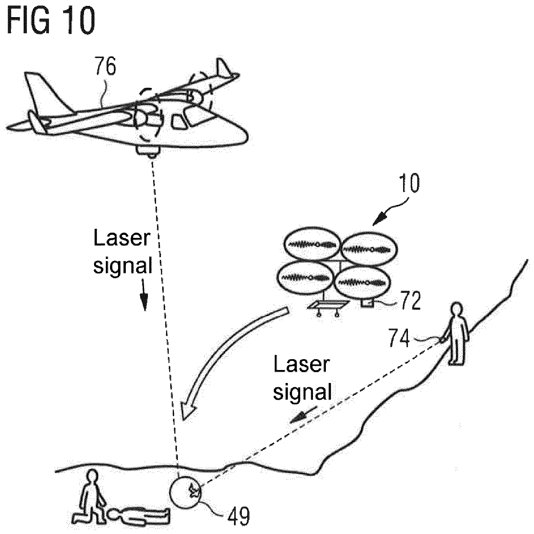

However, if necessary, the unmanned aircraft 10 can also be operated independently of the mobile guidance system 50. For this purpose, the unmanned aircraft 10 also comprises a laser signal receiver 72 which is configured to receive a laser signal indicating the desired landing zone 49. As shown in Figure 10, the laser signal can be directed from a mobile laser pointer 74, which can be manually operated, or another unmanned aircraft 76 to the desired landing zone 49 in order to mark the landing zone 49 in a manner which is discernible to the laser signal receiver 72 of the unmanned aircraft 10. The control system 30 of the unmanned aircraft 10 can then control the landing approach of the unmanned aircraft 10 to the desired landing zone 49 in the first, second and/or third phase of the landing approach on the basis of the laser signal received by the laser signal receiver 72.

## Claims

1. Unmanned aircraft (10) comprising:
a GPS receiver (54) which is configured to receive a GPS signal defining a desired landing zone (49) for the unmanned aircraft (10);
a transponder (58) which is configured to transmit a position signal defining a current position of the unmanned aircraft (10) and is also configured to receive a position correction signal if the current position of the unmanned aircraft (10) differs from a desired position;
a light signal receiver (62) which is configured to receive a light signal defining the desired landing zone (49) for the unmanned aircraft (10);
a foldable basic body (12); and
a control system (30) for autonomously controlling the unmanned aircraft (10), which control system is configured
(i) to control a landing approach of the unmanned aircraft (10) to the desired landing zone (49) at least in a first phase of the landing approach on the basis of the GPS signal received by the GPS receiver (54),
(ii) to control the landing approach of the unmanned aircraft (10) to the desired landing zone (49) at least in a second phase of the landing approach following the first phase on the basis of the position correction signal received by the transponder (58), and
(iii) to control the landing approach of the unmanned aircraft (10) to the desired landing zone (49) at least in a third phase of the landing approach following the second phase on the basis of the light signal received by the light signal receiver (62).

2. Unmanned aircraft (10) according to Claim 1, which also comprises a laser signal receiver (72) which is configured to receive a laser signal indicating the desired landing zone (49), wherein the control system (30) for autonomously controlling the unmanned aircraft (10) is also configured to control the landing approach of the unmanned aircraft (10) to the desired landing zone (49) in the third phase of the landing approach on the basis of the laser signal received by the laser signal receiver (72).

3. Unmanned aircraft (10) according to Claim 1 or 2, which further comprises at least one drive rotor (14), wherein the drive rotor (14) in particular is connected to the basic body (12) and/or accommodated in a rotor cage (16).

4. Unmanned aircraft (10) according to one of claims Claim 1 to 3, wherein the basic body (12) is foldable about a folding axis (A), and wherein the unmanned aircraft (10) comprises a plurality of drive rotors (14) arranged symmetrically around the folding axis (A).

5. Unmanned aircraft (10) according to one of Claims 1 to 4, which also comprises:
- a landing frame (24) connected to the basic body (12), and/or
- a carrier (26) for accommodating loads which is connected to the basic body (12).

6. Unmanned aircraft (10) according to Claim 5,
wherein the carrier (26) for accommodating loads comprises:
- a stretcher (28) suitable for supporting a person, and/or
- a holder (34) which is adjustable between a holding position, in which it connects a load (36) to the basic body (12) of the unmanned aircraft (10), and a release position, in which it allows the load (36) to be released from the basic body (12) of the unmanned aircraft (10).

7. Unmanned aircraft (10) according to one of Claims 1 to 6, which also comprises:
- an altitude sensor (44) for measuring the altitude of the unmanned aircraft (10) above sea level, and/or
- a distance sensor (48) for measuring the height of the unmanned aircraft (10) above ground.

8. Unmanned aircraft (10) according to one of Claims 1 to 7, which also comprises at least one safety switch (32) which is configured to transmit a release signal to the control system (30) of the unmanned aircraft (10), wherein the control system (30) is configured to allow the unmanned aircraft (10) to be started only in response to the reception of the release signal from the safety switch (32).

9. Aircraft/guidance system arrangement (100) comprising:
- an unmanned aircraft (10) according to one of Claims 1 to 8; and
- a mobile guidance system (50) for assisting with the approach of an unmanned aircraft (10) to a desired landing zone (49), which mobile guidance system comprises:
a GPS transmitter (52) which is configured to transmit a GPS signal defining a desired landing zone (49) for the unmanned aircraft (10);
a transponder (56) which is configured to receive a position signal defining a current position of the unmanned aircraft (10) and is also configured to transmit a position correction signal if the current position of the unmanned aircraft (10) differs from a desired position;
a light signal transmitter (60) which is configured to transmit a light signal defining the desired landing zone (49) for the unmanned aircraft (10); and
a processor (53) which is configured
(i) to cause the GPS transmitter (52) to transmit the GPS signal at least in a first phase of a landing approach of the unmanned aircraft (10) to the desired landing zone (49),
(ii) to evaluate the position signal which is received by the transponder (56) and defines the current position of the unmanned aircraft (10) and to transmit a position correction signal at least in a second phase of the landing approach of the unmanned aircraft (10) to the desired landing zone (49), which second phase follows the first phase, and
(iii) to cause the light signal transmitter (60) to transmit the light signal at least in a third phase of the landing approach of the unmanned aircraft (10) to the desired landing zone (49), which third phase follows the second phase.

10. Aircraft/guidance system arrangement according to Claim 9, wherein the mobile guidance system (50) is equipped with an energy source (70) which comprises a thermal battery, a rechargeable battery and/or a disposable battery.

11. Aircraft/guidance system arrangement according to Claim 9 or 10, wherein the mobile guidance system (50) also comprises a housing (68) consisting of a material which is resistant to thermal and mechanical loads.

12. Aircraft/guidance system arrangement according to one of Claims 9 to 11, wherein the light signal transmitter (60) is configured to transmit pulsed light signals and/or light signals of different wavelengths.

## Patentansprüche

1. Unbemanntes Luftfahrzeug (10), das umfasst:
einen GPS-Empfänger (54), der dazu eingerichtet ist, ein GPS-Signal zu empfangen, das eine gewünschte Landezone (49) für das unbemannte Luftfahrzeug (10) definiert;
einen Transponder (58), der dazu eingerichtet ist, ein Positionssignal zu senden, das eine aktuelle Position des unbemannten Luftfahrzeugs (10) definiert, und der ferner dazu eingerichtet ist, ein Positionskorrektursignal zu empfangen, wenn die aktuelle Position des unbemannten Luftfahrzeugs (10) von einer gewünschten Position abweicht;
einen Lichtsignal-Empfänger (62), der dazu eingerichtet ist, ein Lichtsignal zu empfangen, das die gewünschte Landezone (49) für das unbemannte Luftfahrzeug (10) definiert;
einen faltbaren Basiskörper (12); und
ein Steuerungssystem (30) zur autonomen Steuerung des unbemannten Luftfahrzeugs (10), das dazu eingerichtet ist,
(i) einen Landeanflug des unbemannten Luftfahrzeugs (10) auf die gewünschte Landezone (49) zumindest in einer ersten Phase des Landeanflugs in Abhängigkeit des von dem GPS-Empfänger (54) empfangenen GPS-Signals zu steuern,
(ii) den Landeanflug des unbemannten Luftfahrzeugs (10) auf die gewünschte Landezone (49) zumindest in einer sich an die erste Phase anschließenden zweiten Phase des Landeanflugs in Abhängigkeit des von dem Transponder (58) empfangenen Positionskorrektursignals zu steuern, und
(iii) den Landeanflug des unbemannten Luftfahrzeugs (10) auf die gewünschte Landezone (49) zumindest in einer sich an die zweite Phase anschließenden dritten Phase des Landeanflugs in Abhängigkeit des von dem Lichtsignal-Empfänger (62) empfangenen Lichtsignals zu steuern.

2. Unbemanntes Luftfahrzeug (10) nach Anspruch 1,
das ferner einen Lasersignal-Empfänger (72) umfasst, der dazu eingerichtet ist, ein Lasersignal zu empfangen, das die gewünschte Landezone (49) kennzeichnet, wobei das Steuerungssystem (30) zur autonomen Steuerung des unbemannten Luftfahrzeugs (10) ferner dazu eingerichtet ist, den Landeanflug des unbemannten Luftfahrzeugs (10) auf die gewünschte Landezone (49) in der ersten, der zweiten und/oder der dritten Phase des Landeanflugs in Abhängigkeit des von dem Lasersignal-Empfänger (72) empfangenen Lasersignals zu steuern.

3. Unbemanntes Luftfahrzeug (10) nach Anspruch 1 oder 2,
das ferner mindestens einen Antriebsrotor (14) umfasst, wobei der Antriebsrotor (14) insbesondere mit dem Basiskörper verbunden und/oder in einem Rotorkäfig (16) aufgenommen ist.

4. Unbemanntes Luftfahrzeug (10) nach einem der Ansprüche 1 bis 3,
wobei der Basiskörper (12) um eine Faltachse (A) faltbar ausgebildet ist, und wobei das unbemannte Luftfahrzeug (10) eine Mehrzahl von symmetrisch um die Faltachse (A) angeordneten Antriebsrotoren (14) umfasst.

5. Unbemanntes Luftfahrzeug (10) nach einem der Ansprüche 1 bis 4,
das ferner umfasst:
- ein mit dem Basiskörper (12) verbundenes Landungsgestell (24) und/oder
- einen mit dem Basiskörper (12) verbundenen Träger (26) zur Aufnahme von Lasten.

6. Unbemanntes Luftfahrzeug (10) nach Anspruch 5,
wobei der Träger (26) zur Aufnahme von Lasten umfasst:
- eine zur Lagerung einer Person geeignete Trage (28) und/oder
- eine Halterung (34) die zwischen einer Haltestellung, in der sie eine Last (36) mit dem Basiskörper (12) des unbemannten Luftfahrzeugs (10) verbindet, und einer Lösestellung, in der sie eine Lösung der Last (36) von dem Basiskörper (12) des unbemannten Luftfahrzeugs (10) erlaubt, verstellbar ist.

7. Unbemanntes Luftfahrzeug (10) nach einem der Ansprüche 1 bis 6,
das ferner umfasst:
- einen Höhensensor (44) zur Messung der Höhe des unbemannten Luftfahrzeugs (10) über dem Meeresspiegel und/oder
- einen Abstandssensor (48) zur Messung der Höhe des unbemannten Luftfahrzeugs (10) über Grund.

8. Unbemanntes Luftfahrzeug (10) nach einem der Ansprüche 1 bis 7,
das ferner mindestens einen Sicherheitsschalter (32) umfasst, der dazu eingerichtet ist, ein Freigabesignal an das Steuerungssystem (30) des unbemannten Luftfahrzeugs (10) zu senden, wobei das Steuerungssystem (30) dazu eingerichtet ist, einen Start des unbemannten Luftfahrzeugs (10) nur in Reaktion auf den Empfang des Freigabesignals von dem Sicherheitsschalter (32) zuzulassen.

9. Luftfahrzeug/Leitsystem-Anordnung (100), die umfasst:
- ein unbemanntes Luftfahrzeug (10) gemäß einem der Ansprüche 1 bis 8; und
- ein mobiles Leitsystem (50) zur Unterstützung des Anflugs des unbemannten Luftfahrzeugs (10) auf eine gewünschte Landezone (49), das umfasst:
einen GPS-Sender (52), der dazu eingerichtet ist, ein GPS-Signal zu senden, das eine gewünschte Landezone (49) für das unbemannte Luftfahrzeug (10) definiert;
einen Transponder (56), der dazu eingerichtet ist, ein Positionssignal zu empfangen, das eine aktuelle Position des unbemannten Luftfahrzeugs (10) definiert, und der ferner dazu eingerichtet ist, ein Positionskorrektursignal zu senden, wenn die aktuelle Position des unbemannten Luftfahrzeugs (10) von einer gewünschten Position abweicht;
einen Lichtsignal-Sender (60), der dazu eingerichtet ist, ein Lichtsignal zu senden, das die gewünschte Landezone (49) für das unbemannte Luftfahrzeug (10) definiert; und
einen Prozessor (53), der dazu eingerichtet ist,
(i) den GPS-Sender (52) zu veranlassen, das GPS-Signal zumindest in einer ersten Phase eines Landeanflugs des unbemannten Luftfahrzeugs (10) auf die gewünschte Landezone (49) zu senden,
(ii) das von dem Transponder (56) empfangene Positionssignal, das die aktuelle Position des unbemannten Luftfahrzeugs (10) definiert, auszuwerten und zumindest in einer sich an die erste Phase anschließenden zweiten Phase des Landeanflugs des unbemannten Luftfahrzeugs (10) auf die gewünschte Landezone (49) ein Positionskorrektursignal zu senden, und
(iii) den Lichtsignal-Sender (60) zu veranlassen, das Lichtsignal zumindest in einer sich an die zweite Phase anschließenden dritten Phase des Landeanflugs des unbemannten Luftfahrzeugs (10) auf die gewünschte Landezone (49) zu senden.

10. Luftfahrzeug/Leitsystem-Anordnung (100) nach Anspruch 9,
wobei das mobile Leitsystem (50) mit einer Energiequelle (70) ausgestattet ist, die eine Thermalbatterie, eine wiederaufladbare Batterie und/oder eine Einwegbatterie umfasst.

11. Luftfahrzeug/Leitsystem-Anordnung (100) nach Anspruch 9 oder 10,
wobei das mobile Leitsystem (50) ferner ein aus einem gegen thermische und mechanische Lasten widerstandsfähigen Material bestehendes Gehäuse (68) umfasst.

12. Luftfahrzeug/Leitsystem-Anordnung (100) nach einem der Ansprüche 9 bis 11, wobei der Lichtsignal-Sender (60) des mobilen Leitsystems (50) dazu eingerichtet ist, gepulste Lichtsignale und/oder Lichtsignale unterschiedlicher Wellenlängen zu senden.

## Revendications

1. Aéronef sans pilote (10) comprenant :
un récepteur GPS (54) qui est configuré pour recevoir un signal GPS définissant une zone d'atterrissage souhaitée (49) pour l'aéronef sans pilote (10) ;
un transpondeur (58) qui est configuré pour transmettre un signal de position définissant une position actuelle de l'aéronef sans pilote (10) et qui est également configuré pour recevoir un signal de correction de position si la position actuelle de l'aéronef sans pilote (10) diffère d'une position souhaitée ;
un récepteur de signal lumineux (62) qui est configuré pour recevoir un signal lumineux définissant la zone d'atterrissage souhaitée (49) pour l'aéronef sans pilote (10) ;
un corps de base pliable (12) ; et
un système de commande (30) destiné à commander de manière autonome l'aéronef sans pilote (10), lequel système de commande est configuré pour
(i) commander une approche d'atterrissage de l'aéronef sans pilote (10) vers la zone d'atterrissage souhaitée (49) au moins dans une première phase de l'approche d'atterrissage sur la base du signal GPS reçu par le récepteur GPS (54),
(ii) commander l'approche d'atterrissage de l'aéronef sans pilote (10) vers la zone d'atterrissage souhaitée (49) au moins dans une deuxième phase de l'approche d'atterrissage à la suite de la première phase sur la base du signal de correction de position reçu par le transpondeur (58), et
(iii) commander l'approche d'atterrissage de l'aéronef sans pilote (10) vers la zone d'atterrissage souhaitée (49) au moins dans une troisième phase de l'approche d'atterrissage à la suite de la deuxième phase sur la base du signal lumineux reçu par le récepteur de signal lumineux (62).

2. Aéronef sans pilote (10) selon la revendication 1, comprenant également un récepteur de signal laser (72) qui est configuré pour recevoir un signal laser indiquant la zone d'atterrissage souhaitée (49), dans lequel le système de commande (30) destiné à commander de manière autonome l'aéronef sans pilote (10) est également configuré pour commander l'approche d'atterrissage de l'aéronef sans pilote (10) vers la zone d'atterrissage souhaitée (49) dans la troisième phase de l'approche d'atterrissage sur la base du signal laser reçu par le récepteur de signal laser (72).

3. Aéronef sans pilote (10) selon la revendication 1 ou 2, comprenant au moins un rotor d'entraînement (14), dans lequel le rotor d'entraînement (14) est en particulier relié au corps de base (12) et/ou logé dans une cage de rotor (16).

4. Aéronef sans pilote (10) selon l'une quelconque des revendications 1 à 3, dans lequel le corps de base (12) est pliable autour d'un axe de pliage (A), et dans lequel l'aéronef sans pilote (10) comprend une pluralité de rotors d'entraînement (14) agencés de manière symétrique autour de l'axe de pliage (A).

5. Aéronef sans pilote (10) selon l'une quelconque des revendications 1 à 4, comprenant également :
- un cadre d'atterrissage (24) relié au corps de base (12), et/ou
- un transporteur (26) destiné à recevoir des charges qui est relié au corps de base (12).

6. Aéronef sans pilote (10) selon la revendication 5,
dans lequel le transporteur (26) destiné à recevoir des charges comprend :
- un brancard (28) approprié pour supporter une personne, et/ou
- un support (34) qui est ajustable entre une position de maintien, dans laquelle il relie une charge (36) au corps de base (12) de l'aéronef sans pilote (10), et une position de libération, dans laquelle il permet à la charge (36) d'être libérée du corps de base (12) de l'aéronef sans pilote (10).

7. Aéronef sans pilote (10) selon l'une quelconque des revendications 1 à 6, comprenant également :
- un capteur d'altitude (44) destiné à mesurer l'altitude de l'aéronef sans pilote (10) au-dessus du niveau de la mer, et/ou
- un capteur de distance (48) destiné à mesurer la hauteur de l'aéronef sans pilote (10) au-dessus du sol.

8. Aéronef sans pilote (10) selon l'une quelconque des revendications 1 à 7, comprenant également au moins un commutateur de sécurité (32) qui est configuré pour transmettre un signal de libération au système de commande (30) de l'aéronef sans pilote (10), dans lequel le système de commande (30) est configuré pour permettre à l'aéronef sans pilote (10) d'être démarré uniquement en réponse à la réception du signal de libération provenant du commutateur de sécurité (32).

9. Agencement de système de guidage/aéronef (100) comprenant :
- un aéronef sans pilote (10) selon l'une quelconque des revendications 1 à 8 ; et
- un système de guidage mobile (50) destiné à assister l'approche d'un aéronef sans pilote (10) vers une zone d'atterrissage souhaitée (49), lequel système de guidage mobile comprend :
un émetteur GPS (52) qui est configuré pour transmettre un signal GPS définissant une zone d'atterrissage souhaitée (49) pour l'aéronef sans pilote (10) ;
un transpondeur (56) qui est configuré pour recevoir un signal de position définissant une position actuelle de l'aéronef sans pilote (10) et qui est également configuré pour transmettre un signal de correction de position si la position actuelle de l'aéronef sans pilote (10) diffère d'une position souhaitée ;
un émetteur de signal lumineux (60) qui est configuré pour transmettre un signal lumineux définissant la zone d'atterrissage souhaitée (49) pour l'aéronef sans pilote (10) ; et
un processeur (53) qui est configuré pour
(i) amener l'émetteur GPS (52) à transmettre le signal GPS au moins dans une première phase d'une approche d'atterrissage de l'aéronef sans pilote (10) à la zone d'atterrissage souhaitée (49),
(ii) évaluer le signal de position qui est reçu par le transpondeur (56) et qui définit la position actuelle de l'aéronef sans pilote (10) et pour transmettre un signal de correction de position au moins dans une deuxième phase de l'approche d'atterrissage de l'aéronef sans pilote (10) à la zone d'atterrissage souhaitée (49), laquelle deuxième phase suit la première phase, et
(iii) amener l'émetteur de signal lumineux (60) à transmettre le signal lumineux au moins dans une troisième phase de l'approche d'atterrissage de l'aéronef sans pilote (10) à la zone d'atterrissage souhaitée (49), laquelle troisième phase suit la deuxième phase.

10. Agencement de système de guidage/aéronef selon la revendication 9, dans lequel le système de guidage mobile (50) est muni d'une source d'énergie (70) qui comprend une batterie thermique, une batterie rechargeable et/ou une batterie jetable.

11. Agencement de système de guidage/aéronef selon la revendication 9 ou 10, dans lequel le système de guidage mobile (50) comprend également un logement (68) constitué d'un matériau qui résistant aux charges thermiques et mécaniques.

12. Agencement de système de guidage/aéronef selon l'une quelconque des revendications 9 à 11, dans lequel l'émetteur de signal lumineux (60) est configuré pour transmettre des signaux lumineux pulsés et/ou des signaux lumineux de différentes longueurs d'onde.
